# EUROPEAN PATENT APPLICATION

(11) **EP 2 385 308 A2**
(43) Date of publication of application: **09.11.2011**
(21) Application number: 11165004.0
(22) Date of filing: 05.05.2011
(51) Int. Cl.: F23R 3/60, F01D 9/02

(54) **Reduced pressure loss transition support**

(30) Priority: 06.05.2010 US 774822
(71) Applicant: General Electric Company, Schenectady, NY 12345 (US)
(72) Inventor: Dicintio, Richard Martin, Greenville, SC 29615 (US); Pentecost, Ronnie Ray, Greenville, SC 29615 (US); Schott, Carl Gerard, Greenville, SC 29615 (US); Widener, Stanley Kevin, Greenville, SC 29615 (US)
(74) Representative: Gray, Thomas

(57) **Abstract**

A transition piece (20) support for a turbomachine includes one or more support arms (40) extending across a diffuser flowpath (42) to the transition piece (20). The one or more support arms (40) include a streamwise surface (46) and a crosswise surface (48). A streamwise extent (50) of the streamwise surface (46) is greater than a crosswise extent (52) of the crosswise surface (48) to reduce flow anomalies in a flow (32) of fluid across the one or more support arms (40). A turbomachine includes a combustor (14), a diffuser (34), a transition piece (20) operably connected to the combustor (14) and a transition piece support including one or more support arms (40) extending across a flow (32) of fluid to the transition piece (20). The support arms (40) include a streamwise surface (46) and a crosswise surface (48). A streamwise extent (50) of the streamwise surface (46) is greater than a crosswise extent (52) of the crosswise surface (48) to reduce flow anomalies in a flow (32) of fluid across the one or more support arms (40).

## Description

### BACKGROUND OF THE INVENTION

The subject matter disclosed herein relates to turbomachines. More specifically, the subject disclosure relates to supports for combustor components of turbomachines.

Turbomachines, for example, gas turbines, include a transition piece which directs flow from a compressor and diffuser toward a combustor and directs combustion products toward a turbine. The transition piece is typically located and secured in the turbomachine via a transition piece support. A typical transition piece support includes one or more arms which extend across a flowpath between the diffuser and the transition piece. The arms of a conventional support block considerable flow in the flow path resulting in a pressure drop and flow instability across the transition support bracket. This pressure drop negatively impacts total system performance.

### BRIEF DESCRIPTION OF THE INVENTION

According to one aspect of the invention, a transition piece support for a turbomachine includes one or more support arms extending across a flow of fluid to the transition piece. The one or more support arms include a streamwise surface and a crosswise surface. A streamwise extent of the streamwise surface is greater than a crosswise extent of the crosswise surface to reduce flow anomalies in the flow of fluid across the one or more support arms.

According to another aspect of the invention, a turbomachine includes a combustor, a diffuser and a transition piece operably connected to the combustor for directing a flow from the diffuser into the combustor. A transition piece support is configured to secure the transition piece in a desired position relative to the combustor and including one or more support arms extending across a flow of fluid to the transition piece. The one or more support arms include a streamwise surface and a crosswise surface. A streamwise extent of the streamwise surface is greater than a crosswise extent of the crosswise surface to reduce flow anomalies in the flow of fluid across the one or more support arms.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a cross-sectional view of an embodiment of a turbomachine;
FIG. 2 is a schematic view of an embodiment of a transition piece support for a turbomachine;
FIG. 3 is a cross-sectional view of an embodiment of a transition piece support for a turbomachine;
FIG. 4 is a cross-sectional view of another embodiment of a transition piece support for a turbomachine; and
FIG. 5 is a cross-sectional view of yet another embodiment of a transition piece support for a turbomachine.

The detailed description explains embodiments of the invention, together with advantages and features, by way of example with reference to the drawings.

### DETAILED DESCRIPTION OF THE INVENTION

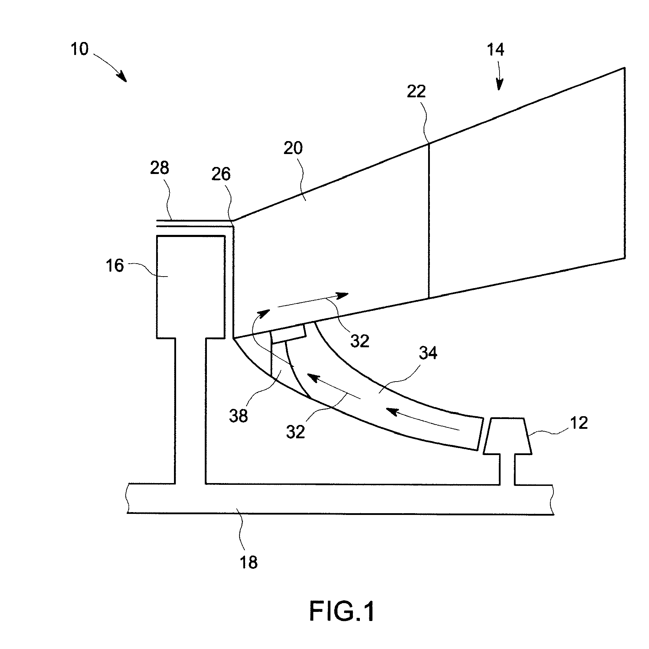

Shown in FIG. 1 is an embodiment of a turbomachine, for example, a gas turbine 10. The gas turbine 10 includes a compressor 12 which provides compressed fluid to a plurality of combustors 14. Flow, as identified by arrows 32, proceeds from the compressor 12, through a diffuser 34, which in some embodiments may be a radial diffuser. The flow 32 passes through a transition piece 20 and enters the combustor 14 for combustion. Fuel is injected into the combustor 14, mixes with the compressed air and is ignited. The hot gas product of the combustion flows to a turbine 16 which extracts work from the hot gas to drive a rotor shaft 18 which in turn drives the compressor 12. The plurality of combustors 14 may be arranged circumferentially around the rotor shaft 18, and in some embodiments may number, for example, 6, 10, 14 or 18 combustors 14. The transition piece 20 is coupled at an upstream end 22 to the combustor 14 and at a downstream end 26 to an aft frame 28 of the turbine 16. The transition piece 20 carries hot gas flow from the combustor 14 to the turbine 16.

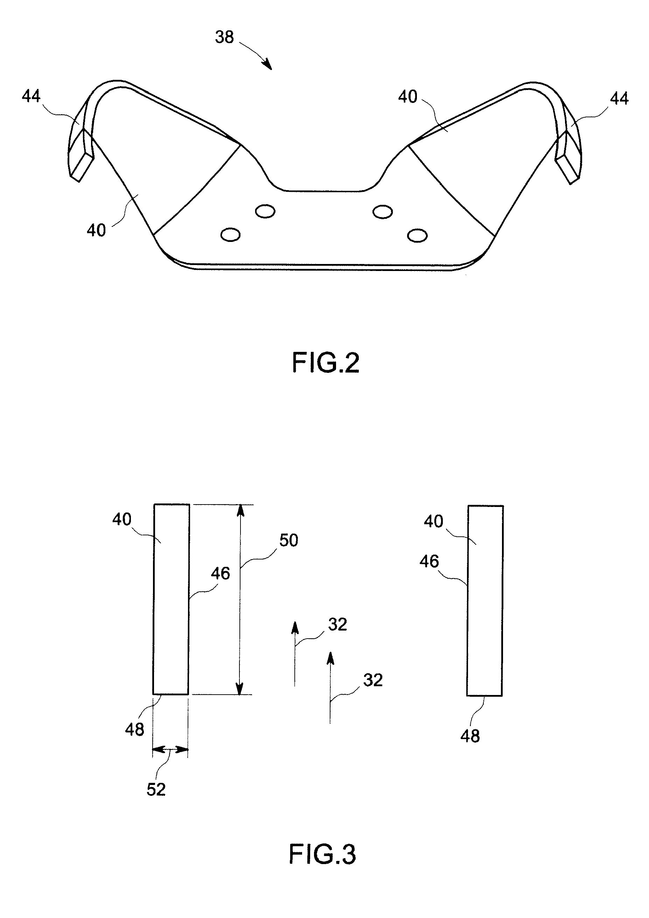

The transition piece 20 is positioned and secured in the gas turbine 10 by a transition support bracket 38. In some embodiments, the transition support bracket 38 is secured to the diffuser 34 by, for example, one or more fasteners extending through the transition support bracket 38 and into the diffuser 34. As shown in FIG. 2, the transition support bracket 38 includes one or more support arms 40 which extend across a diffuser flowpath 42 from the diffuser 34 to the transition piece 20 and are supportive thereof. At an end of each support arm 40, the transition support bracket 38 includes, for example, a tab 44 for securing the transition support bracket 38 to the transition piece 20.

The support arms 40 are configured and disposed to reduce a pressure drop and/or turbulent flow across the support arms 40 in the diffuser flowpath 42. For example, as shown in FIG. 3, some embodiments of transition support brackets 38 include support arms 40 having substantially rectangular cross-sections. The rectangular cross-section comprises a streamwise surface 46 oriented parallel to the flow 32 through the diffuser 34 and a crosswise surface 48 oriented perpendicular to the flow 32 through the diffuser 34. As shown in FIG. 3, a streamwise extent 50 of the streamwise surface 46 is greater than a crosswise extent 52 of the crosswise surface 48 to reduce blockage of flow 32 by the support arms 40 thus resulting in a reduction of the pressure drop and/or turbulent flow across the support arms 40.

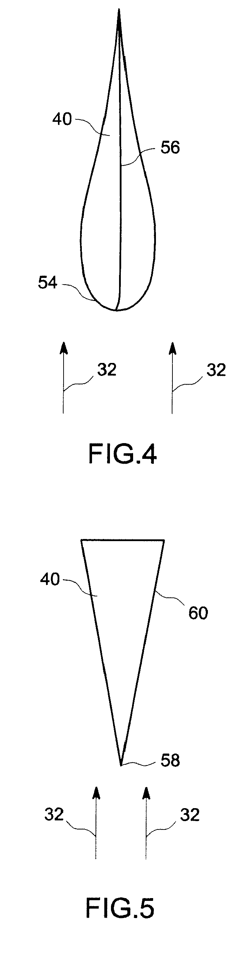

In another embodiment, shown in FIG. 4, the support arms 40 may be configured with an airfoil-shaped cross section. The airfoil-shaped cross section includes a leading edge 54 located and oriented to substantially face the flow 32 and a chord 56 extending substantially along the direction of the flow 32. The airfoil-shaped cross section is configured and oriented to reduce the pressure drop and/or turbulent flow. Support arm 40 cross-sections are not limited to rectangular or airfoil shapes. For example, as shown in FIG. 5, the support arm 40 cross-section may be triangular, and have a vertex 58 facing the flow 32. One or more legs 60 extend streamwise along the support arms 40.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A transition piece (20) support for a turbomachine comprising:
one or more support arms (40) extending across a diffuser flowpath (42) toward a transition piece (20), the one or more support arms (40) including a streamwise surface (46) and a crosswise surface (48), wherein a streamwise extent (50) of the streamwise surface (46) is greater than a crosswise extent of the crosswise surface (48) to reduce flow anomalies in a flow (32) of fluid across the one or more support arms.

2. The support of claim 1, wherein the support is secured to the transition piece (20) and/or a diffuser (34) of the turbomachine.

3. The support of claim 1 or 2, wherein the one or more support arms (40) are two support arms (40).

4. The support of any of the preceding claims, wherein the one or more support arms (40) have a substantially rectangular cross-sectional shape.

5. The support of any of the preceding claims, wherein the one or more support arms (40) have a substantially airfoil-shaped cross-section.

6. The support of claim 5, wherein the crosswise surface (48) is a leading edge of the airfoil-shaped cross-section.

7. The support of any of the preceding claims, wherein the one or more support arms (40) have a substantially triangular cross-sectional shape.

8. A turbomachine comprising:
a combustor (14);
a diffuser (34) ;
a transition piece (20) operably connected to the combustor (14) for directing a flow (32) from the diffuser (34) into the combustor (14); and
a transition piece (20) support according to any of claims 1 to 7 to secure the transition piece (20) in a desired position relative to the combustor (14).

9. The turbomachine of claim 8, wherein the support is secured to the transition piece (20) and/or the diffuser (34) of the turbomachine.

10. The turbomachine of claim 8, wherein the one or more support arms are two support arms.

11. The turbomachine of claim 8, wherein the one or more support arms have a substantially rectangular cross-sectional shape.

12. The turbomachine of Claim 8 wherein the one ore more support arms (40) have a substantially airfoil-shaped cross-section.

13. The turbomachine of claim 12, wherein the crosswise surface is a leading edge of the airfoil-shaped cross-section.

14. The turbomachine of claim 8, wherein the one or more support arms have a substantially triangular cross-sectional shap.
